# EUROPEAN PATENT SPECIFICATION

(11) **EP 4 689 475 B1**
(45) Date of publication and mention of the grant of the patent: **22.07.2026**
(21) Application number: 24754724.3
(22) Date of filing: 12.08.2024
(51) Int. Cl.: F21K 9/232, F21V 23/04, F21V 25/04, F21Y 115/10, F21Y 103/10

(54) **FILAMENT LAMP WITH TEMPERATURE SENSING**
GLÜHLAMPE MIT TEMPERATURMESSUNG
LAMPE À FILAMENT À DÉTECTION DE TEMPÉRATURE

(30) Priority: 25.08.2023 WO PCT/CN2023/115083; 25.09.2023 EP 23199279
(43) Date of publication of application: 11.02.2026
(73) Proprietor: Signify Holding B.V., 5656 AE Eindhoven (NL)
(72) Inventor: ZHANG, Wentao, 5656 AE Eindhoven (NL); TIAN, Xiaogai, 5656 AE Eindhoven (NL); WANG, Zhong, 5656 AE Eindhoven (NL); WANG, Xiaofeng, 5656 AE Eindhoven (NL); XIE, Zhihong, 5656 AE Eindhoven (NL); SUN, Shiguang, 5656 AE Eindhoven (NL); ZHU, Yao, 5656 AE Eindhoven (NL)
(74) Representative: Verweij, Petronella Daniëlle
(86) International application number: PCT/EP2024/072699
(87) International publication number: WO 2025/045569

(56) References cited:
- CN-A- 107 869 709
- CN-U- 208 750 425
- CN-U- 210 291 446
- CN-U- 211 424 141
- JP-A- 2015 062 185
- US-A1- 2018 045 380

## Description

### FIELD OF THE INVENTION

The present invention relates to the field of lighting, and in particular to filament lamps.

### BACKGROUND OF THE INVENTION

There is an ongoing desire to improve artificial lighting. Filament lamps, such as lightbulbs, are used to provide artificial light in a wide variety of environments, such as in domestic, industrial and/or public settings.

Filament lamps currently on the market can be divided into at least three types: spiral, upright and crossing. A spiral filament lamp usually comprises a bundle of one or more filaments that is/are arranged to form a spiral or a helix, i.e., to form a spiral or helical structure. An upright filament lamp comprises a plurality of filaments that are positioned vertically with respect to the filament lamp, so that they lie perpendicularly to a socket into which the filament lamp is connected. A crossing filament lamp comprises a plurality of filaments that are inclined within the filament lamp, so that they are inclined with respect to a socket into which the filament lamp is connected.

Document CN 210 291 446 U discloses a filament lamp according to the preamble of claim 1.

There is an ongoing desire to improve the effectiveness of filament lamps.

### SUMMARY OF THE INVENTION

The invention is defined by the claims.

According to the invention, there is provided a filament lamp comprising: a plurality of filaments bounding a filament interior volume, each filament being configured to emit light; a heat sensor configured to generate a heat signal responsive to heat produced by the plurality of filaments, wherein the heat sensor is not electrically connected in series with any of the plurality of filaments and is configured to sense heat at a sensing location positioned within the filament interior volume; and a control arrangement configured to control at least a current flow through each of the plurality of filaments responsive to the heat signal, characterized in that the sensing location is located closer to a center of the filament interior volume than any boundary of the filament interior volume.

The present disclosure thereby provides a filament lamp having a temperature sensor that detects a temperature within a volume bound by filaments of the filament lamp. In this way, the heat sensor can effectively generate a heat signal that is responsive to a (average) filament temperature. The detected temperature is used to control a current flow within the filaments of the filament lamp, e.g., to provide over temperature protection (OTP) for the filament lamp.

By detecting the temperature within the volume bound by the filaments, the detected temperature is more sensitive to an average temperature of the filaments, reducing a likelihood that an increase in temperature of one of the filaments, e.g., due to a fault, short-circuit or the like, is undetected or masked by other filaments. In particular, there is a reduced risk that an increase in temperature of a filament located more distant than one or more other filaments is missed or imperceptible.

Another advantage is that the heat sensor is less visible to a viewer of the filament lamp. The proposed heat sensor will also block less light for emission out of the lamp compared to a heat sensor located outside of the filament interior volume.

Configuring the heat sensor to not be connected in series with the plurality of filaments reduces a heat emitted by the heat sensor. In particular, a current flow through a filament is necessarily high in order to cause the filament to emit light. A heat sensor connected in series with one or more such filaments would therefore emit significant waste heat, which may be detected by the heat sensor, reducing the accuracy of detecting the filament temperature. By not connecting the heat sensor in series with the filament(s), this risk is mitigated or avoided.

The filament interior volume may have a cylindrical or prism shape. In other words, the filament lamp may be an upright filament lamp. Other suitable examples for the filament interior volume include a conical shape, a truncated cone shape or a frustum shape.

The sensing location is located closer to a center of the filament interior volume than any boundary of the filament interior volume. This approach further increases a sensitivity of the heat sensor to an average temperature of the filaments, thereby reducing a risk that an increase in temperature of (e.g., only) one of the filaments is missed. In particular, there is a reduced risk that an increase in temperature of a filament located more distant than one or more other filaments is missed or otherwise rendered imperceptible.

The filament lamp may further comprise a central pillar configured to provide structural support to the plurality of filaments, wherein the central pillar extends at least partially through the filament interior volume and the sensing location is more proximate to the central pillar than any of the plurality of filaments.

In some examples, the filament interior volume is elongate in a first direction from a first side to a second side, wherein a distance between the first side and second side defining a length of the filament interior volume; and a distance between the sensing location and the first side is between 0.4 and 0.6 times the length of the filament interior volume. This approach positions the sensing location more centrally within the filament interior volume, thereby further increasing a sensitivity of the heat sensor to an average temperature of the filaments.

In some examples, the sensing location is located, when the plurality of filaments emit light, at a hottest location within the filament interior volume. This makes the heat signal particularly sensitive to changes in the filament temperature.

Each filament of the plurality of filaments may be an elongate filament. In some examples, each elongate filament is configured to extend in a respective filament direction, wherein each filament direction is parallel to each other filament direction.

Optionally, each elongate filament has a same filament length, wherein a filament length is a length of the elongate filament in its respective filament direction. Each elongate filament may extend in its respective filament direction from a same filament plane. In some examples, a distance between the filament plane and the sensing location is between 0.4 and 0.6 times the filament length.

The plurality of filaments may be evenly distributed around the bounds of the filament interior volume. This increases a likelihood that a hottest part of the filament interior volume will be located at the centroid of the filament interior volume.

The heat sensor may comprise a probe positioned at the sensing location, wherein the heat sensor is configured to generate the heat signal responsive to the temperature of the probe. The probe may be formed from a heat-sensitive element, having a property (particularly an electrical property such as resistance or impedance) that responds or changes responsive to changes in temperature. The heat sensor may monitor an electrical signal through the heat-sensitive element in order to monitor or sense heat at the sensing location.

The filament lamp may further comprise a bulbous envelope configured to cover the plurality of filaments and the heat sensor. The bulbous envelope may be formed from any suitable transparent or translucent material, such as glass, plastics and so on.

The plurality of filaments may comprise no fewer than 3 filaments, e.g., no fewer than 5 filaments.

The filament lamp may further comprise a stem for providing electrical connectors for the plurality of filaments, wherein the heat sensor is mounted on the stem.

The heat sensor may be a thermistor. In particular, the heat sensor may comprise the heat-sensitive element previously mentioned, which takes the form of a thermistor.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 provides a view of a proposed lamp;
Figure 2 provides a cross-sectional view of the proposed lamp;
Figure 3 provides another view of the proposed lamp; and
Figure 4 illustrates circuitry for use in the proposed lamp.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a filament lamp having a heat sensor. The filament lamp comprises a plurality of filaments that bound a filament lamp volume. The heat sensor is configured to sense a heat at a sensing location within the filament lamp volume. A control arrangement is configured to control the current flow in the filaments responsive to the heat sensed by the heat sensor.

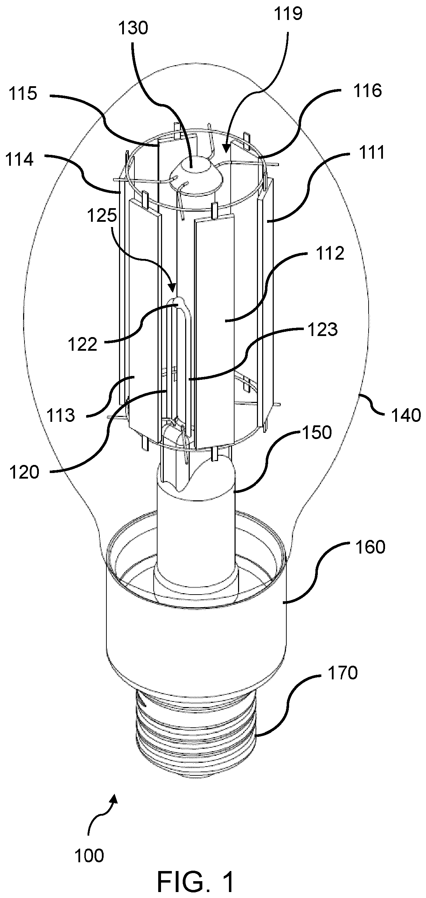

Figure 1 illustrates a filament lamp 100 according to a proposed concept, which is designed to perform heat or temperature sensing and control an operation of the filament lamp 100 responsive to a detected heat. The filament lamp comprises a plurality of filaments 111, 112, 113, 114, 115, 116, a heat sensor 120 and a control arrangement (not visible in Figure 1).

The plurality of filaments 111, 112, 113, 114, 115, 116 define the bounds of a volume, which is labelled a filament interior volume 119. For instance, the filament interior volume 119 may be a volume whose bounds or edges intersect each of the plurality of filaments 111, 112, 113, 114, 115, 116. In this way, the filament interior volume 119 may form a hypothetical 3D shape (e.g., a prism, cylinder, spheroid, sphere, truncated cone, frustum or cone) whose bounds or edges intersect each of the plurality of filaments.

Thus, if the filaments are aligned parallel to one another to extend between two planes, then the filament interior volume may have a cylindrical or prism shape. In other words, the filament lamp may be an upright filament lamp. Alternatively, the filaments may be tilted with respect to one another, e.g., to form a filament interior volume having a truncated cone or frustum shape. Other suitable arrangements for the filaments will be readily apparent to the appropriately skilled person.

Each filament 111, 112, 113, 114, 115, 116 of the plurality of filaments is configured to emit light, e.g., when an appropriate current is passed therethrough. Light emitted by the filaments is output from the filament lamp 100 to illuminate an environment surrounding the filament lamp.

A filament is an elongate element that emits light when powered. Examples of suitable filaments include LED filaments (e.g., comprising a linear string of LEDs) and incandescent filaments (e.g., made from tungsten or other suitable materials). An LED filament may be formed from a string of LEDs covered or encapsulated with a covering or protective portion. The covering portion may be continuously formed along the LED filament. The covering portion may be formed from a transmissive and/or dispersive material, e.g., a phosphor blended resin or plastics.

The operation and light emission control of filaments are well known in the art, and are not described in detail for the sake of conciseness. The precise configuration and/or design of the filaments is largely immaterial to the proposed approach.

The heat sensor 120 is configured to generate a heat signal responsive to heat produced by the plurality of filaments. More specifically, the heat sensor is configured to sense a heat at a sensing location 125 that is located within the filament interior volume 119. Thus, the sensing location lies between the plurality of filaments. It will be clear that the heat signal is therefore responsive, i.e., changes responsive to, to (changes in) a heat at the sensing location 125.

The heat sensor 120 may be configured to be insensitive or negligibly sensitive to any changes in heat outside of the heat sensing location 125, i.e., changes in heat outside of the heat sensing location that do not result in a change in heat at the heat sensing location.

More particularly, the heat sensor 120 may comprise a probe 122 or sensing joint positioned at the sensing location 125. The heat signal generated by the heat sensor 120 may correspondingly be responsive to any change in a temperature of the probe 122, and therefore of a temperature at the sensing location 125.

The probe 122 may be a heat-sensitive component, such that one or more properties of the heat-sensitive component (e.g., impedance, resistivity and/or capacitance) change responsive to a heat at the sensing location. In such embodiments, the heat signal may be produced by monitoring any changes to an electrical signal (e.g., a change in current or voltage drop) passing through the heat-sensitive component.

The position of the heat sensing location results in the heat signal being less sensitive to changes in heat from any specific filament lamp than a location outside of the filament interior volume 119. In particular, the proposed position for the heat sensing location provides a better representation of an average measure of heat output by all of the filaments in the lamp than if it were located outside of the filament interior volume 119. This can, for instance, reduce a risk that a temperature surge in any one of the filaments will be masked (by other filaments) or go undetected in the heat signal.

The heat sensing location 119 may thereby effectively represent a hotspot of the filament lamp 100. In particular, the heat emitted by the plurality of filaments will overlap to a greater extent at positions within the filament interior volume than positions outside of the filament interior volume. Thus, if all filaments are at a same temperature, the temperature within the filament interior volume is more likely to be closer to the true or accurate (average) temperature of the filaments than at positions outside of the filament interior volume 119.

Another advantage to the position of the heat sensing location is to reduce a visibility of the probe 122 (if present). In particular, positioning the sensing location 125 within the filament interior volume reduces a blocking of light emitted out from the filament lamp 100 by any probe 122 of the filament lamp 100.

The heat sensor 120 is also not electrically connected in series with any of the plurality of filaments 111, 112, 113, 114, 115, 116. This advantageously reduces a likelihood that any heat emitted by the heat sensor will be detected by the heat sensor itself, as the heat sensor would otherwise conduct a current used to drive the filament, thereby acting as a parasitic load and emitting undesirable heat. In this way, the efficiency of the filament lamp can be improved whilst also improving the accuracy of the heat sensor.

The control arrangement (not visible in Figure 1) is configured to control at least a current flow through each of the plurality of filaments responsive to the heat signal. Approaches for controlling a current flow through a filament are well known in the art, and may (for instance) comprise diverting current away from a filament, controlling a driving arrangement to reduce a magnitude of a current for a filament, controlling a duty cycle of a pulse width modulation for current flowing through the filament(s) and so on.

In particular, the control arrangement may be configured to provide over-temperature protection for the lamp 100, e.g., to increase a longevity of the filament lamp 100 and/or the filaments contained therein.

As a working example, the control arrangement may be configured to reduce a current flow (e.g., reduce an average magnitude of an electrical current passing through) in each filament responsive to an increase in heat/temperature (as detected by the heat sensor 120).

As another example, the control arrangement may be configured to prevent or stop current flow to one or more of the filaments responsive to a sensed heat exceeding a predetermined value, e.g., to avoid or prevent significant deterioration of the filaments of the lamp 100.

The heat sensor 120 may be connected to the control arrangement by one or more electrical connectors 123, such as wires or other electrically conductive materials. In some examples, the electrical connectors are configured to provide structural support to a probe 122 of the heat sensor 120, to improve the robustness of the heat sensor and the filament lamp (e.g., against shaking of the filament lamp 100 during transportation and/or installation). A suitable example of an electrical connector 123 that can provide such a structural support is an electrically conductive rod, such as a tungsten rod. Thus, the filament lamp 100 may comprise one or more electrically conductive rods 123 (such as tungsten rods) for electrically connecting the heat sensor 120 to the control arrangement (not visible in Figure 1) and structurally supporting the heat sensor 120.

According to the invention, the sensing location 125 is located closer to a center of the filament interior volume than any boundary of the filament interior volume 119. The center of the filament interior volume 119 may, for instance, be the centroid of the filament interior volume 119. This improves the closeness of the heat signal to representing the average heat emitted by the filament lamp 100 compared to other positions for the sensing location 125.

The filament lamp 100 may further comprise a central pillar 130. The central pillar 130 may be configured to structurally support the plurality of filaments. The central pillar 130 may also comprise one or more conductors for forming an electrical circuit for the plurality of filaments, e.g., providing a return path for current flow through the plurality of filaments.

The central pillar 130 extends at least partially through the filament interior volume 119. The sensing location 125 may be more proximate to the central pillar than any of the plurality of filaments.

In some examples, the sensing location 119 is located, when the plurality of filaments emits light, at a hottest location within the filament interior volume. A hottest location can be determined, for instance, using simulation technique to simulate the distribution of heat emitted by each of the filaments and thereby the optimal position for the heat sensing location.

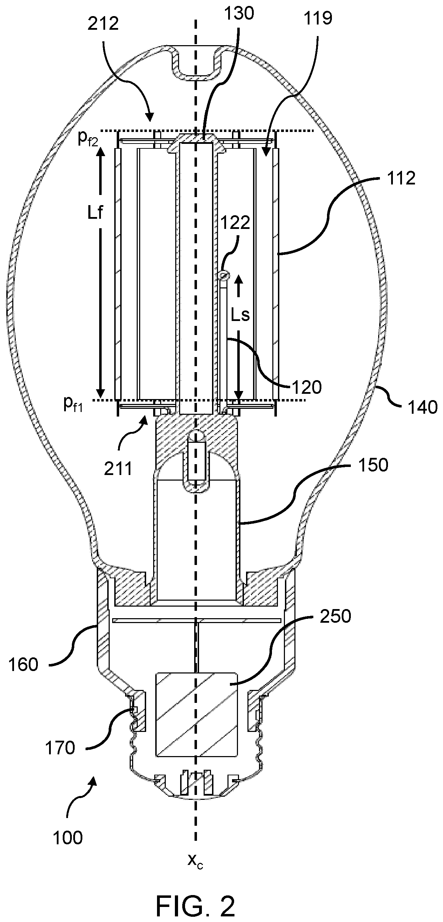

Figure 2 provides a cross-sectional view of the filament lamp 100 for improved contextual understanding of a proposed configuration for the filaments and/or the position of the sensing location 119.

As illustrated, the filament interior volume 119 may be elongate in a first direction from a first side 211 to a second side 212. A distance between the first side and second side may define a length of the filament interior volume. In such examples, a distance between the sensing location and the first side 211 (or second side) is between 0.4 and 0.6 times the length of the filament interior volume. This approach positions the sensing location to be closer to a central location of the filament interior volume, thereby providing a better representation of the average temperature of the filaments 111, 112, 113, 114, 115, 116.

As illustrated in Figures 1 and 2, each filament of the plurality of filaments may be an elongate filament. In particular, each elongate filament is configured to extend in a respective filament direction, wherein each filament direction is parallel to each other filament direction. This can effectively configure the filament interior volume to be in the form of a prism, e.g., having a same cross-sectional shape within a plane perpendicular to the filament directions.

Each elongate filament 111,112, 113, 114, 115, 116 may have a same filament length Lf. A filament length is a length of the elongate filament in its respective filament direction. Each elongate filament 111, 112, 113, 114, 115, 116, may extend in its respective filament direction from a same filament plane p_{f1}.

Thus, each elongate filament may extend from a first filament plane p_{f1} to a second filament plane p_{f2}, which lies parallel to the first filament plane. The distance between the first p_{f1} and second p_{f2} filament planes may be the filament length Lf. In some examples, the filament interior volume 119 is further bounded by the first p_{f1} and second p_{f2} filament planes. In this way, the filament interior volume may be bound by the filaments 111, 112, 113, 114, 115, 116 and the first p_{f1} and second p_{f2} filament planes.

In some examples, a distance between the (first) filament plane p_{f1} and the sensing location 125 is between 0.4 and 0.6 times the filament length Lf. This approach positions the sensing location to be closer to a central location of the filament interior volume, thereby providing a better representation of the average temperature of the filaments 111, 112, 113, 114, 115, 116.

As illustrated, the plurality of filaments may be evenly distributed around the bounds of the filament interior volume. This increases the likelihood that a central location within the filament interior volume 119 will act as the hotspot for heat emitted by the plurality of filaments.

Figure 2 also illustrates how the (optional) central pillar 130 may be positioned to align with, e.g., be centered around, a central axis x_{c} of the filament lamp 100. The central axis x_{c} may extend in the direction of the filament lamp and intersect a centroid of the filament lamp 100.

In preferred examples, the sensing location 125 is located closer to the central axis x_{c} of the filament lamp than any of the filaments. The filaments may be positioned around the central axis x_{c} filament lamp.

In some examples, the filaments 111, 112, 113, 114, 115, 116 have rotational symmetry about the central axis x_{c} of the filament lamp 100. This improves a uniformity of light distribution for light emitted by the filaments out of the filament lamp 100.

Figures 1 and 2 illustrate further possible features for the filament lamp 100.

The filament lamp 100 may further comprise a stem 150. The stem provides wires for electrical connection for powering the filaments. Approaches for providing such electrical connections are well known in the art.

The heat sensor 120 may be mounted on the stem 150.

The filament lamp 100 may further comprise a bulbous envelope 140 that covers the plurality of filaments 111, 112, 113, 114, 115, 116.

The envelope 140 may, for instance, be formed of a transparent or translucent material that ensures illumination from the plurality of filaments is capable of dissipating or being transmitted to the surroundings. Thus, the envelope may be formed from a transmissive and/or dispersive material. For example, the material of the envelope 140 may be glass or plastic.

In the depicted embodiment, the envelope 140 has a bulged cross section. More specifically, under the IEC/TR 60887:2010 standard, the envelope 140 has a shape corresponding to the letter symbol "B". However, in alternative embodiments the envelope 140 may have a candle flame shaped cross-section, a spherical shaped cross-section, a mushroom shaped cross section, or any shaped cross-section appropriate to house at least the plurality of filaments.

Thus, the shape of the bulb envelope 140 may be appropriately modified or changed to match the desired standard for the lamp. The shape of the bulb envelope for a given bulb type (e.g., A60, G95 or ST64) is defined by the letter prefix in the bulb type, as set out in the IEC/TR 60887:2010 standard. The numbers in the bulb type define the diameter/width of the bulb envelope, as also set out in the IEC/TR 60887:2010 standard.

In the illustrated example, the filament lamp 100 further comprises a mount 160 that provides structural support to other elements of the filament lamp. The mount is therefore suitable for mechanically supporting the other elements of the filament lamp.

The filament lamp 100 may further comprise a filament lamp base 170. The filament lamp base 170 provides a means for mounting the filament lamp 100 to a socket (not shown) on a wall, ceiling or any other surface. In some embodiments, the filament lamp base may comprise a screw cap, a pin and push cap or a bayonet cap. However, embodiments are not restricted to these, and the filament lamp base 193 may be any means suitable for fitting the filament lamp 100 to a filament lamp receiving socket.

The filament lamp base 170 may be appropriately configured to facilitate external powering of the (wires in the) stem 150. Thus, the filament lamp base may comprise one or more conductors for providing a path for power from outside of the filament lamp 100 to the stem 150.

Figure 2 conceptually illustrates the control arrangement 250. In particular, the control arrangement may be located in the mount 160 and/or base 170, although other locations are possible (e.g., within the stem 150).

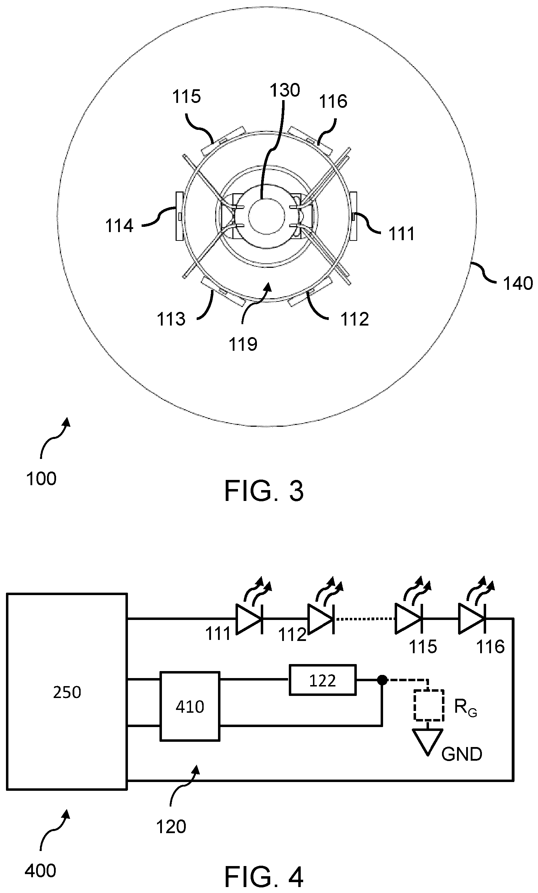

Figure 3 provides another (top down) view of the filament lamp 100 for improved conceptual understanding. In particular, this view more clearly illustrates how the plurality of filaments 111, 112, 113, 114, 115, 116 may be evenly distributed around the filament interior volume 119.

In particular, the plurality of filaments may be evenly distributed around the central pillar 130, such that the distance between the central pillar 130 and each of the plurality of filaments is substantially the same.

Figure 4 illustrates circuitry 400 for the filament lamp 100.

The circuitry 400 comprises the control arrangement 250 configured to control the current through the plurality of filaments 111, 112, 113, 114, 115, 116. The control arrangement 250 may be performed, for instance, by controlling the magnitude of the current provided to each filament.

In particular examples, the control arrangement 250 may be configured to perform an over temperature protection (OTP) function for the filament lamp using the heat signal. Thus, the heat signal may be processed and used to decide whether and/or how to modify or adjust a current flowing through the filament(s) in order to control a temperature of the filament lamp. Approaches are known in the art.

The circuitry also comprises the heat sensor 120. As illustrated, the heat sensor is not connected in series to any of the filaments. The heat sensor 120 may comprise the probe 122, e.g., the heat-sensitive element, and a heat signal generator 410. The heat signal generator 410 may be configured to generate the heat signal responsive to a change in a property of the probe.

By way of example, the probe 122 may be a thermistor. The heat signal generator may be configured to sense a change in resistance through the probe in order to generate the heat signal. For instance, the heat signal generator may provide a fixed voltage to the probe 122 and monitor a current through the probe 122 to detect a change in heat. As another example, the probe 122 may form part of a voltage divider 122, R_{G}, and the heat signal generator may provide a same voltage to the probe and detect a change in a voltage at an intermediate node of the voltage divider to detect a change in heat. In a simple example, the voltage divider may comprise the probe 122 (as a thermistor) and a grounding resistor R_{G} connected to a ground or reference voltage GND.

A wide variety of other examples of heat sensors will be readily apparent to the skilled person, such as those comprising negative temperature coefficient (NTC) thermistors, resistance temperature detectors (RTDs), thermocouples and/or semiconductor-based sensors. Another suitable example of a heat sensor is an infrared sensor.

In the illustrated example, the plurality of filaments 111, 112, 113, 114, 115, 116 are connected in series. In alternative examples, the plurality of filaments are connected in parallel. In yet other examples, the plurality of filaments comprise two or more sets of one or more filaments (e.g., at least two filaments per set). Each filament in a same set is connected in parallel, with different sets of filaments being connected in parallel.

In the illustrated and above-described examples, the filament lamp 100 comprises six filaments 111, 112, 113, 114, 115, 116. However, the filament lamp 100 may comprise any number of filaments, e.g., two or more filaments, e.g., three or more filaments, e.g., five or more filaments.

Preferably, a current flow to/through the heat sensor 120 is lower than the current flow through any of the plurality of filaments when they emit light. For instance, the average current through the heat sensor, or at least the probe 122 of the heat sensor, may be less than 10% of the average current through any of the plurality of filaments. This significantly reduces a heat leak by the heat sensor and improves an accuracy of the heat signal.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A filament lamp (100) comprising:
a plurality of filaments (111, 112, 113, 114, 115, 116) bounding a filament interior volume (119), each filament being configured to emit light;
a heat sensor (120) configured to generate a heat signal responsive to heat produced by the plurality of filaments, wherein the heat sensor is not electrically connected in series with any of the plurality of filaments and is configured to sense heat at a sensing location (125) positioned within the filament interior volume; and
a control arrangement (250) configured to control at least a current flow through each of the plurality of filaments responsive to the heat signal;
**characterized in that** the sensing location (125) is located closer to a center of the filament interior volume than any boundary of the filament interior volume.

2. The filament lamp (100) of claim 1, further comprising a central pillar (130) configured to provide structural support to the plurality of filaments,
wherein the central pillar extends at least partially through the filament interior volume and the sensing location is more proximate to the central pillar than any of the plurality of filaments.

3. The filament lamp (100) of claim 1 or 2, wherein:
the filament interior volume is elongate in a first direction from a first side (211) to a second side (212), a distance between the first side and second side defining a length of the filament interior volume; and
a distance between the sensing location and the first side is between 0.4 and 0.6 times the length of the filament interior volume.

4. The filament lamp (100) of any of claims 1 to 3, wherein the sensing location is located, when the plurality of filaments emit light, at a hottest location within the filament interior volume.

5. The filament lamp (100) of any of claims 1 to 4, wherein each filament of the plurality of filaments is an elongate filament.

6. The filament lamp (100) of claim 5, wherein each elongate filament is configured to extend in a respective filament direction, wherein each filament direction is parallel to each other filament direction.

7. The filament lamp (100) of claim 6, wherein each elongate filament has a same filament length (Lf), wherein a filament length is a length of the elongate filament in its respective filament direction.

8. The filament lamp (100) of claim 7, wherein each elongate filament extends in its respective filament direction from a same filament plane (p_{f1}).

9. The filament lamp (100) of claim 8, wherein a distance between the filament plane (p_{f1}) and the sensing location (125) is between 0.4 and 0.6 times the filament length (Lf).

10. The filament lamp (100) of any of claims 1 to 9, wherein the plurality of filaments are evenly distributed around the bounds of the filament interior volume.

11. The filament lamp (100) of any of claims 1 to 10, wherein the heat sensor comprises a probe (122) positioned at the sensing location, wherein the heat sensor is configured to generate the heat signal responsive to the temperature of the probe.

12. The filament lamp (100) of any of claims 1 to 11, wherein the plurality of filaments comprises no fewer than 3 filaments.

13. The filament lamp (100) of any of claims 1 to 12, further comprising a stem for providing electrical connectors for the plurality of filaments, wherein the heat sensor is mounted on the stem.

14. The filament lamp (100) of any of claims 1 to 13, wherein the heat sensor is a thermistor.

## Patentansprüche

1. Filamentlampe (100), umfassend:
eine Vielzahl von Filamenten (111, 112, 113, 114, 115, 116), die ein Filamentinnenvolumen (119) begrenzen, wobei jeder Filament konfiguriert ist, um Licht zu emittieren;
einen Wärmesensor (120), der konfiguriert ist, um ein Wärmesignal als Reaktion auf Wärme, die durch die Vielzahl von Filamenten produziert wird, zu erzeugen, wobei der Wärmesensor mit einem beliebigen der Vielzahl von Filamenten nicht elektrisch in Reihe geschaltet ist und konfiguriert ist, um Wärme an einer Erfassungsstelle (125), die innerhalb des Filamentinnenvolumens positioniert ist, zu erfassen; und
eine Steueranordnung (250), die konfiguriert ist, um mindestens einen Stromfluss durch jeden der Vielzahl von Filamenten als Reaktion auf das Wärmesignal zu steuern;
**dadurch gekennzeichnet, dass** sich die Erfassungsstelle (125) näher an einem Zentrum des Filamentinnenvolumens als eine beliebige Begrenzung des Filamentinnenvolumens befindet.

2. Filamentlampe (100) nach Anspruch 1, ferner umfassend eine zentrale Säule (130), die konfiguriert ist, um strukturelle Unterstützung für die Vielzahl von Filamenten bereitzustellen,
wobei sich die zentrale Säule mindestens teilweise durch das Filamentinnenvolumen erstreckt und die Erfassungsstelle näher an der zentralen Säule als ein beliebiger der Vielzahl von Filamenten ist.

3. Filamentlampe (100) nach Anspruch 1 oder 2, wobei:
das Filamentinnenvolumen in eine erste Richtung von einer ersten Seite (211) zu einer zweiten Seite (212) länglich ist, wobei ein Abstand zwischen der ersten Seite und der zweiten Seite eine Länge des Filamentinnenvolumens definiert; und
ein Abstand zwischen der Erfassungsstelle und der ersten Seite zwischen 0,4 und 0,6 mal die Länge des Filamentinnenvolumens beträgt.

4. Filamentlampe (100) nach einem der Ansprüche 1 bis 3, wobei sich die Erfassungsstelle, wenn die Vielzahl von Filamenten Licht emittieren, an einer heißesten Stelle innerhalb des Filamentinnenvolumens befindet.

5. Filamentlampe (100) nach einem der Ansprüche 1 bis 4, wobei jeder Filament der Vielzahl von Filamenten ein länglicher Filament ist.

6. Filamentlampe (100) nach Anspruch 5, wobei jeder längliche Filament konfiguriert ist, um sich in eine jeweilige Filamentrichtung zu erstrecken, wobei jede Filamentrichtung zu jeder anderen Filamentrichtung parallel ist.

7. Filamentlampe (100) nach Anspruch 6, wobei jeder längliche Filament eine gleiche Filamentlänge (Lf) aufweist, wobei eine Filamentlänge eine Länge des länglichen Filaments in seiner jeweiligen Filamentrichtung ist.

8. Filamentlampe (100) nach Anspruch 7, wobei sich jeder längliche Filament in seine jeweilige Filamentrichtung von einer gleichen Filamentebene (p_{f1}) erstreckt.

9. Filamentlampe (100) nach Anspruch 8, wobei ein Abstand zwischen der Filamentebene (p_{f1}) und der Erfassungsstelle (125) zwischen 0,4 und 0,6 mal die Filamentlänge (Lf) beträgt.

10. Filamentlampe (100) nach einem der Ansprüche 1 bis 9, wobei die Vielzahl von Filamenten um die Grenzen des Filamentinnenvolumens gleichmäßig verteilt sind.

11. Filamentlampe (100) nach einem der Ansprüche 1 bis 10, wobei der Wärmesensor eine Sonde (122), die an der Erfassungsstelle positioniert ist, umfasst, wobei der Wärmesensor konfiguriert ist, um das Wärmesignal als Reaktion auf die Temperatur der Sonde zu erzeugen.

12. Filamentlampe (100) nach einem der Ansprüche 1 bis 11, wobei die Vielzahl von Filamenten nicht weniger als 3 Filamente umfasst.

13. Filamentlampe (100) nach einem der Ansprüche 1 bis 12, ferner umfassend einen Schaft zum Bereitstellen elektrischer Verbinder für die Vielzahl von Filamenten, wobei der Wärmesensor auf dem Schaft montiert ist.

14. Filamentlampe (100) nach einem der Ansprüche 1 bis 13, wobei der Wärmesensor ein Thermistor ist.

## Revendications

1. Lampe à filament (100) comprenant :
une pluralité de filaments (111, 112, 113, 114, 115, 116) délimitant un volume intérieur de filament (119), chaque filament étant conçu pour émettre de la lumière ;
un capteur de chaleur (120) configuré pour générer un signal de chaleur en réponse à la chaleur produite par la pluralité de filaments, dans laquelle le capteur de chaleur n'est pas connecté électriquement en série avec l'un quelconque de la pluralité de filaments et est configuré pour détecter la chaleur au niveau d'un emplacement de détection (125) positionné dans le volume intérieur de filament ; et
un agencement de commande (250) configuré pour commander au moins un écoulement de courant à travers chacun de la pluralité de filaments en réponse au signal de chaleur ;
**caractérisée en ce que** l'emplacement de détection (125) est situé plus près d'un centre du volume intérieur de filament qu'une quelconque limite du volume intérieur de filament.

2. Lampe à filament (100) selon la revendication 1, comprenant en outre un pilier central (130) conçu pour fournir un support structurel à la pluralité de filaments,
dans laquelle le pilier central s'étend au moins partiellement à travers le volume intérieur de filament et l'emplacement de détection est plus proche du pilier central que l'un quelconque de la pluralité de filaments.

3. Lampe à filament (100) selon la revendication 1 ou 2, dans laquelle :
le volume intérieur de filament est allongé dans une première direction d'un premier côté (211) à un second côté (212), une distance entre le premier côté et le second côté définissant une longueur du volume intérieur de filament ; et
une distance entre l'emplacement de détection et le premier côté est comprise entre 0,4 et 0,6 fois la longueur du volume intérieur de filament.

4. Lampe à filament (100) selon l'une quelconque des revendications 1 à 3, dans laquelle l'emplacement de détection est situé, lorsque la pluralité de filaments émet de la lumière, à l'emplacement le plus chaud à l'intérieur du volume intérieur de filament.

5. Lampe à filament (100) selon l'une quelconque des revendications 1 à 4, dans laquelle chaque filament de la pluralité de filaments est un filament allongé.

6. Lampe à filament (100) selon la revendication 5, dans laquelle chaque filament allongé est conçu pour s'étendre dans une direction de filament respective, dans laquelle chaque direction de filament est parallèle à chaque autre direction de filament.

7. Lampe à filament (100) selon la revendication 6, dans laquelle chaque filament allongé a une même longueur de filament (Lf), dans laquelle une longueur de filament est une longueur du filament allongé dans sa direction de filament respective.

8. Lampe à filament (100) selon la revendication 7, dans laquelle chaque filament allongé s'étend dans sa direction respective de filament à partir d'un même plan de filament (p_{f1}).

9. Lampe à filament (100) selon la revendication 8, dans laquelle une distance entre le plan de filament (p_{f1}) et l'emplacement de détection (125) est comprise entre 0,4 et 0,6 fois la longueur du filament (Lf).

10. Lampe à filament (100) selon l'une quelconque des revendications 1 à 9, dans laquelle la pluralité de filaments est uniformément répartie autour des limites du volume intérieur de filament.

11. Lampe à filament (100) selon l'une quelconque des revendications 1 à 10, dans laquelle le capteur de chaleur comprend une sonde (122) positionnée au niveau de l'emplacement de détection, dans laquelle le capteur de chaleur est configuré pour générer le signal de chaleur en réponse à la température de la sonde.

12. Lampe à filament (100) selon l'une quelconque des revendications 1 à 11, dans laquelle la pluralité de filaments comprend pas moins de 3 filaments.

13. Lampe à filament (100) selon l'une quelconque des revendications 1 à 12, comprenant en outre une tige permettant de fournir des connecteurs électriques pour la pluralité de filaments, dans laquelle le capteur de chaleur est monté sur la tige.

14. Lampe à filament (100) selon l'une quelconque des revendications 1 à 13, dans laquelle le capteur de chaleur est une thermistance.
